(19) Europäisches Patentamt
European Patent Office
Office européen des brevets

(11) EP 0 644 245 B1

(12) EUROPÄISCHE PATENTSCHRIFT

(45) Veröffentlichungstag und Bekanntmachung des Hinweises auf die Patenterteilung:
**21.03.2001 Patentblatt 2001/12**

(51) Int Cl.[7]: **C09D 5/44**

(21) Anmeldenummer: **94114667.2**

(22) Anmeldetag: **17.09.1994**

(54) **Wässrige Dispersionen, deren Herstellung und Verwendung in Überzugsmitteln zur kathodischen Tauchlackierung**

Aqueous dispersions, their manufacture and use in coatings for cathodic electrodeposition

Dispersions aqueuses, leur préparation et leur utilisation dans les revêtements pour électrodéposition cathodique

(84) Benannte Vertragsstaaten:
**AT BE CH DE ES FR GB IT LI NL PT SE**

(30) Priorität: **18.09.1993 DE 4331780**

(43) Veröffentlichungstag der Anmeldung:
**22.03.1995 Patentblatt 1995/12**

(73) Patentinhaber: **E.I. DU PONT DE NEMOURS AND COMPANY**
**Wilmington Delaware 19898 (US)**

(72) Erfinder:
- **Collong, Wilfried, Dr.**
**D-42929 Wermelskirchen (DE)**
- **Evers, Manfred**
**D-42555 Velbert (DE)**
- **Patzschke, Hans-Peter, Dr.**
**D-42279 Wuppertal (DE)**
- **Vogt-Birnbrich, Bettina, Dr.**
**D-42719 Solingen (DE)**

(74) Vertreter: **Gille Hrabal Struck Neidlein Prop Roos**
**Patentanwälte**
**Brucknerstrasse 20**
**40593 Düsseldorf (DE)**

(56) Entgegenhaltungen:
**EP-A- 0 287 089**
**EP-A- 0 516 066**
**US-A- 3 937 679**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 644 245 B1

## Beschreibung

Die Erfindung betrifft wäßrige kationische Bindemitteldispersionen, die zur Elektrotauchlack (KTL)-Beschichtung geeignet sind, sowie die daraus hergestellten Überzugsmittel.

Der Einsatz von neutralisierten Kunstharzen, die mit Wasser verdünnbar sind, ist für die moderne Lackiertechnik von hoher Bedeutung, weil durch einen geringen Lösemittelgehalt den Umweltschutzbemühungen entgegengekommen und die Feuer- und Explosionsgefahr herabgesetzt wird. Ein rationelles, automatisches Arbeitsverfahren wird durch die elektrophoretische Abscheidung der Lack-Bindemittel auf elektrisch leitenden Untergründen und Einbrennen des abgeschiedenen Films möglich. Solche Beschichtungen sind schon über einige Jahrzehnte im praktischen Einsatz. An der Kathode abscheidbare Aminoepoxidharze bilden hierbei die Grundierungsschicht in einer heutigen Automobillackierung wegen ihres guten Korrosionsschutzes und hohen Umgriffs. Grundsätzlich werden dabei mindestens zwei OH-Gruppen enthaltende Aminoepoxidharze eingesetzt, die mit blockierten Polyisocyanaten bei erhöhten Reaktionstemperaturen vernetzen.

Ein wichtiger Bindemitteltyp besteht aus Polyglycidylethern mit einem Epoxidäquivalentgewicht über 1000, die durch Reaktion mit längerkettigen Diolen in Gegenwart von basischen Katalysatoren modifiziert werden, sowie durch terminale Einführung von tertiären und blockierten primären Aminogruppen.

Ein weiterer Bindemitteltyp enthält laterale kurzkettige Dialkylamino-gruppen, die durch Reaktion von difunktionellen Aminen mit Diglycidylethern mit einem Epoxidäquivalentgewicht unter 1000 hergestellt werden.

Zur Herstellung eines pigmentierten Elektrotauch-Badmaterials (ETBadmaterials) wird eine wäßrige Pigmentpaste mit einer nicht pigmenthaltigen wäßrigen KTL-Bindemittel-Dispersion gemischt, die möglichst lösemittelarm sein soll.

Die Herstellung solcher Bindemittel-Dispersionen leidet daran, daß die beiden gängigen Bindemittelsysteme für die Synthese zur Überwindung der hohen Viskositäten und zur Reaktionssteuerung für die Synthese organische Hilfslösemittel notwendig sind, die später bei der Herstellung wäßriger Dispersionen wieder abdestilliert werden müssen, um geeignete lösemittelarme Dispersionen zu erhalten. Es gelingt zwar aus dem Kunstharz und dem Vernetzungsmittel in getrennten Operationen die Lösemittel abzudestillieren und wäßrige Dispersionen herzustellen, die längere Zeit stabil sind, beim Mischen der Kunstharz- und Härter-Dispersionen kommt es aber schon nach kurzer Zeit zu Sedimentationen und Ausschwimmeffekten.

Es besteht ein großes Interesse daran, den Anteil der organischen Lösemittel so weit zu verringern, daß die an der Kathode abscheidbare Zubereitung praktisch lösemittelfrei ist bis auf geringe Anteile, die für die Beckensteuerung und die erreichte Filmqualität unbedingt notwendig sind.

In der DE-A-36 02 980 wird ein Verfahren beschrieben, in dem die Mischung von Aminoepoxidharz-Lösung und Härter in Säure und Wasser dispergiert und die als Hilfsmittel verwendeten wasserlöslichen Lösemittel mit einem Siedepunkt unter 100°C unter vermindertem Druck bei schwach erhöhter Temperatur entfernt werden. In der DE-A-37 12 910 werden Mischungen von Aminoepoxidharz-Lösungen und Vernetzungsmittel, die mit Wasser nicht oder nur teilweise mischbare organische Lösemittel enthalten, durch Zusatz von Säure und Wasser dispergiert und die organischen Lösemittel azeotrop vollständig abdestilliert. Alle diese Destillationsverfahren haben den Nachteil, daß sie auf Grund des Destillationsschrittes unwirtschaftlich sind und Probleme bei der Aufarbeitung oder Vernichtung des Destillates entstehen. Bei leicht reaktiven blockierten Polyisocyanaten, wie beispielsweise mit Oximen verkappten Polyisocyanaten, oder Umesterungsvernnetzern können vorzeitige Vernetzungsreaktionen eintreten.

Zur Steuerung von Schichtdicke und Schichtverteilung bei der Elektrotauchlackierung (ETL) sind verschiedene Methoden bekannt:

1. Der Zusatz von Alkoholen und Glykolethern. Sie sind in den offenen Elektrotauch-Bädern (ET-Bädern) flüchtig und verdunsten beim Einbrennen. Der Effekt der Schichtbildung variiert stark und ist schlecht steuerbar.

2. Der Zusatz nicht-flüchtiger, nicht-reaktiver Komponenten in das ETBad. Der Einsatz von größeren Mengen ist ungünstig, weil damit die Spannungsfestigkeit des abgeschiedenen Filmes sinkt. Eine besondere Gruppe dieser Verbindungen sind hierbei nicht-flüchtige OH-gruppen-freie Polyether mit begrenzter Wasserlöslichkeit, wie in EP-A-0 339 795 beschrieben. Die hier besonders bevorzugten Tetraethylenglykoldi-hexylether oder Tetraethylenglykoldibenzylether lassen sich zwar leicht in das Bad einarbeiten, zeigen jedoch Nachteile durch Migrati-onserscheinungen beim Altern der eingebrannten Schichten.

In der EP-A-0 253 404 und EP-A-0 265 655 werden Epoxidharze als Additive zur Steuerung der Schichtdicke von kationischem Tauchlack (KTL)-Bindemit-tel eingesetzt, die aus Diglycidylether von Polyolen hergestellt und anschließend in Anwesenheit von organischen Lösemitteln mit sekundären Dialkyl- oder Dialkanolaminen, sowie Ketiminen von Polyaminen mit sekundären und primären Aminogruppen umgesetzt werden. Eine Molekülvergrößerung der Epoxidharze unter Verwendung von Polyaminen mit primären und tertiären Aminogruppen und/oder Verbindungen

mit zwei sekundären Aminogruppen erfolgt nicht.

In der DE-A-34 36 345 werden hydroxylgruppenhaltige Aminoepoxidharze beschrieben, bei denen zum Elastifizieren ein Teil des aromatischen Polyglycidylethers durch aliphatische Diglycidylether auf Basis von Polypropylenoxid ersetzt ist. In der EP-A-0 193 102 werden Aminoepoxidharze mit primären Hydroxy- und tertiären Aminogruppen hergestellt, die zu 0,5 bis 20 Gew.-% Polyoxy-($C_2$ bis $C_5$-alkylen)-diglycidether mit einer Molmasse von 300 bis 850 enthalten. Die Umsetzung mit Aminen wird in einem reaktionsinerten organischen Lösemittel durchgeführt, das im Anschluß an die Reaktion gegebenenfalls unter Vakuum abdestilliert wird. Alle vorstehend beschriebenen Herstellungsverfahren oder Bindemittel zeigen eine so hohe Viskosität bei der Synthese, daß sie nicht ohne Zusatz von organischen Lösemitteln durchgeführt, bzw. hergstellt werden können. Bei ihrem Einsatz in KTL-Bädern müssen weitgehend flüchtige Lösemittel zugesetzt werden. Soweit eine Entfernung von Lösemitteln überhaupt möglich ist, werden dazu aufwendige Verfahren, wie die in der DE-A-37 12 910 beschriebene azeotrope Destillation benötigt.

Aufgabe der Erfindung ist daher die Bereitstellung von kationischen Überzugsmittel, die im wesentlichen frei von Lösemitteln sind, wobei bei der Herstellung der darin enthaltenen Harze praktisch keine Lösemittel benötigt werden, so daß Destillationsschritte entfallen. Bei der Anwendung als Elektrotauchlacke soll es möglich sein keine zusätzlichen flüchtigen Lösemittel zur Steuerung der Schichtdicke einzusetzen.

Es hat sich gezeigt, daß diese Aufgabe durch die einen Gegenstand der Erfindung bildenden wäßrigen Dispersionen gelöst werden kann. Diese basieren auf hydroxylgruppenhaltigen, zumindest teilweise neutralisierten Aminoepoxidharzen und Vernetzern. Sie haben einen Festkörpergehalt von 30 bis 45 Gew.-% und Teilchengrößen der dispergierten Phase von bis zu 1000 nm, bevorzugt von 30 bis 1000 nm, und einen Lösemittelgehalt von 0 bis 5 Gew.-%. Sie sind erhältlich durch Vermischen oder zumindest teilweises Prekondensieren im lösemittelarmen Zustand bei Temperaturen von 50 bis 140°C, von

I. 95 bis 50 Gew.-% eines oder mehrerer im wesentlichen lösemittelfreier hydroxyl-gruppenhaltiger Aminoepoxidharze mit tertiären Aminogruppen mit einer Aminzahl von 30 bis 120, einer Hydroxylzahl von 20 bis 300 und einem Zahlenmittel der Molmasse von 1000 bis 20000, die im Gemisch mit bis zu 15 Gew.-%, bezogen auf den Harzfestkörpergehalt der gesamten Komponente I, mit einem oder mehreren begrenzt wasserlöslichen, flüssigen, bei Einbrenntemperatur nicht flüchtigen Verdünnungsmitteln auf der Basis von Polyoxyalkylendiolen mit mindestens zwei Alkylenoxideinheiten im Molekül, die mindestens eine nukleophile Gruppe zur Reaktion mit der Vernetzerkomponente II enthalten, vorliegen können, wobei die Aminoepoxidharze oder das Gemisch mit den Verdünnungsmitteln im Durchschnitt 0,3 bis 5,0 mMol/g Alkylenoxideinheiten aufweisen, mit

II. 5 bis 50 Gew.-% eines oder mehrerer Vernetzer, und

III. Neutralisieren des erhaltenen Gemischs bei Temperaturen von 60 bis 95°C, mit 0,1 bis 1,0 mMol einer oder mehreren Monocarbonsäuren pro 1 g Aminoepoxidharz,
und Dispergieren bei diesen Temperaturen in Gegenwart von Wasser.

Einen weiteren Gegenstand der Erfindung bildet das Verfahren zur Herstellung der wäßrigen Dispersionen, das dadurch gekennzeichnet ist, daß man im lösemittelarmen Zustand bei Temperaturen von 50 bis 140°C

I. 95 bis 50 Gew.-% eines oder mehrerer im wesentlichen lösemittel-freier hydroxylgruppenhaltiger Aminoepoxidharze mit tertiären Aminogruppen, mit einer Aminzahl von 30 bis 120, einer Hydroxylzahl von 20 bis 300 und einem Zahlenmittel der Molmasse von 1000 bis 20000, die im Gemisch mit bis zu 15 Gew.-%, bezogen auf den Harzfestkörpergehalt der gesamten Komponente I, mit einem oder mehreren begrenzt wasserlöslichen, flüssigen, bei Einbrenntemperaturen nicht flüchtigen Verdünnungsmitteln auf der Basis von Polyoxyalkylendiolen, die mindestens eine nukleophile Gruppe zur Reaktion mit der Vernetzerkomponente II enthalten, vorliegen können, wobei die Aminoepoxidharze oder das Gemisch mit den Verdünnungsmitteln im Durchschnitt 0,3 bis 5,0 mMol/g Alkylenoxideinheiten aufweisen, mit

II. 5 bis 50 Gew.-% eines oder mehrerer Vernetzer vermischt und gegebenenfalls teilweise prekondensiert und

III. das erhaltene Gemisch bei Temperaturen von 60 bis 95°C mit 0,1 bis 1,0 mMol einer oder mehrerer Monocarbonsäuren pro 1 g Aminoepoxidharz neutralisiert und bei diesen Temperaturen mit Wasser auf einen Festkörpergehalt von 30 bis 45 Gew.-% vermischt.

Die erfindungsgemäßen wäßrigen Dispersionen weisen je nach ihrer Herstellung einen sehr geringen Lösemittelgehalt auf; sie können auch lösemittelfrei formuliert sein. Der Lösemittelgehalt der Dispersionen beträgt beispielsweise 0 bis 5 Gew.-%, vorzugsweise 0 bis 3 Gew.-% bezogen auf das Gewicht der gesamten wäßrigen Dispersion.

Die als Komponente I eingesetzten Aminoepoxidharze oder Gemische mit den Verdünnungsmitteln weisen im Durchschnitt 0,3 bis 5,0 mMol/g Alkylenoxideinheiten auf.

Dieser Gehalt kann beispielsweise erzielt werden durch Bereitstellung eines im wesentlichen lösemittelfreien Gemisches aus

A) einem oder mehreren nicht-flüchtigen, praktisch wasserunlöslichen Verdünnungsmitteln auf der Basis Polyoxyalkylendiolen, die mindestens eine nukleophile Gruppe zur Reaktion mit der Vernetzerkomponente II enthalten, mit

B) einem oder mehreren hydroxylgruppenhaltigen Aminoepoxidharzen mit tertiären Aminogruppen mit einer Aminzahl von 30 bis 120, einer Hydroxylzahl von 20 bis 300 und einem Zahlenmittel der Molmasse von 1000 bis 20000 .

Im allgemeinen enthält ein derartiges Gemisch bis zu 15 Gew.-% der Polyoxyalkylendiol-Komponente A), um die gewünschte Spezifikation an Alkylenoxideinheiten zu erzielen. Dieser Gehalt wird dadurch bestimmt, ob und in welchen Anteilen die als Komponente B) eingesetzten Aminoepoxidharze selbst Alkylenoxideinheiten enthalten.

Es ist jedoch auch möglich statt eines derartigen Gemisches oder innerhalb eines derartigen Gemisches Aminoepoxidharze einzusetzen, die entsprechende Anteile an Alkylenoxideinheiten eingebaut enthalten.

Somit betrifft eine bevorzugte Ausführungsform der Erfindung eine Dispersion und ein Verfahren zu deren Herstellung, wie vorstehend definiert, worin die Komponente I

A) 1 bis 15 Gew.-% eines oder mehrerer der begrenzt wasserlöslichen, flüssigen, bei Einbrenntemperaturen nichtflüchtigen Verdünnungsmittel und

B) 99 bis 85 Gew.-% eines oder mehrerer der hydroxylgruppenhaltigen Aminoepoxidharze mit tertiären Aminogruppen enthält.

Die Herstellung von durch Alkylenoxideinheiten modifizierten Aminoepoxidharzen der Komponente B) kann beispielsweise durch Mitverwendung von mit Polyalkoxyglykolen modifizierten Polyglycidylethern bei deren Herstellung aus Polyglycidylethern und Aminen erfolgen.

Die Herstellung der Aminoepoxidharze der Komponente B) erfolgt beispielsweise bei Temperaturen von 60 bis 140°C, unter Verwendung eines Epoxidharzes oder Epoxidharzgemisches von

a) 100 bis 80 Gew.-% aromatischer Polyglycidylether mit

b) 0 bis 20 Gew.-% mit Polyalkoxyglykolen modifizierter Diglycidylether, die gegebenenfalls gemeinsam mit Bisphenolen kettenverlängert werden.

Gemäß einer bevorzugten Ausführungsform sind die Aminoepoxidharze der Komponente I frei von Alkylenoxideinheiten. Gemäß einer weiteren Austührungsform der Erfindung weisen die Aminoepoxidharze der Komponente I Alkylenoxideinheiten auf und können ausgehend von einem Gemisch aus

a) 99 bis 80 Gew.-% eines oder mehrerer aromatischer Polyglycidylether und
b) 1 bis 20 Gew.-% eines oder mehrerer mit Polyalkoxyglykolen modifizierter Diglycidylether

hergestellt werden.

Bei dieser Verfahrensweise ist es auch möglich, die Komponenten a) und b) getrennt mit Aminen umzusetzen. Dabei werden zwei Aminoepoxidharz-Komponenten erhalten: aus der Komponente a) eine Aminoepoxidharz-Komponente, die frei von Alkylenoxideinheiten ist und aus der Komponente b) eine Aminoepoxidharz-Komponente, die Alkylenoxideinheiten enthält. Die beiden so erhaltenen Aminoepoxidharz-Komponenten können miteinander in derartigen Anteilen gemischt werden, daß der gewünschte Gehalt des Gemischs an Alkylenoxideinheiten erzielt wird. Eine andere Arbeitsweise ist die schrittweise Umsetzung des mit Polyalkoxyglykol modifizierten Glycidylethers mit einem Anteil an Polyamin, das Mischen dieses Reaktionproduktes mit einem aromatischen Diglycidylether eines höheren Molekulargewichts und anschließend der Einbau des restlichen Polyamins.

Um in die Komponente b) aromatische Reste einzuführen, kann diese beispielsweise mit einem aromatischen Phenol, wie Bisphenol-A modifiziert werden. Eine derart modifizierte Komponente b) kann mit Aminen in die entsprechenden Aminoepoxidharze umgewandelt werden; dies kann im Gemisch mit der Komponente a) erfolgen, es ist jedoch auch möglich die aus der so modifizierten Komponenten b) erhaltene Aminoepoxidharz-Komponente mit aus a) erhaltenen Aminoepoxidharzen zu vermischen.

Bei hohen Mengen an Verdünnungsmitteln A) kann auf die Verwendung von Polyalkoxydiolderivaten in der Komponente B) verzichtet werden und umgekehrt. Bevorzugt werden mehr als 1, besonders bevorzugt mehr als 3 Gew.-% und bevorzugt weniger als 15, besonders bevorzugt weniger als 10 Gew.-% Polyalkoxyglykol-Derivaten b) in dem Aminoepoxidharzgemisch verwendet. Bevorzugt werden mehr als 1, besonders bevorzugt mehr als 3 Gew.-% und bevorzugt weniger als 10, besonders bevorzugt weniger als 6 Gew.-% reaktionsfähiger Verdünnungsmittel eingesetzt.

Unter Komponente A) werden begrenzt wasserlösliche, bei Einbrenntemperaturen von aus den Dispersionen erstellten Überzugsmitteln (z.B. Temperaturen bis zu 250°C), nicht-flüchtige Verdünnungsmittel auf Basis Polyoxyalkylendiol verstanden, die mindestens eine nukleophile Gruppe zur Reaktion mit Vernetzungsmitteln haben. Solche Verdünnungsmittel werden auf dem Gebiet der kathodischen Elektrotauchbeschichtung auch als "Schichtbildungsmittel" ("film build up") bezeichnet. Diese Verdünnungsmittel können gleichzeitig als Verdünnungsmittel für die Synthese des Aminoepoxidharzes dienen. Hierunter werden bevorzugt Polyetherglykole der allgemeinen Formel

$$HO - [(CHR)_m - O]_n - OH$$

mit einer Molmasse von 150 bis 2000 verstanden, wobei m = 2 bis 6, bevorzugt 3 bis 4, n = 2 bis 20, bevorzugt über 4 und unter 15 und R ein Wasserstoffatom oder ein niedriger linearer oder verzweigter Alkylrest, bevorzugt mit 1 bis 4 Kohlenstoffatomen ist. Bevorzugte Beispiele sind Poly-1,2-propylenglykol und Poly-1,4-butylenglykol. Es können jedoch auch Mischether aus beispielsweise Ethylenoxid und Propylenoxid eingesetzt werden. Bei der Verwendung von Mischethern werden bevorzugt solche eingesetzt, in denen mindestens 80 % der vorhandenen Alkylenoxideinheiten solche mit mindestens 3 C-Atomen sind. Bevorzugt bestehen die Alkylenoxideinheiten der Komponente I zumindest teilweise aus Propylenoxideinheiten und/oder Butylenoxideinheiten.

Als Verdünnungsmittel (Schichtbildungsmittel) eignen sich bevorzugt spezielle, modifizierte Verbindungen, die entweder direkt bei der Herstellung von Polyoxyalkylenglykolen entstehen oder sich aus den vorstehend beschriebenen Polyoxyalkylenglykolen durch weitere Umsetzungen bilden. So entstehen bei der Reaktion von gegebenenfalls substituierten Mono- oder Polyalkoholen bzw. Polyphenolen mit Alkylenoxiden geeignete Polyalkylenoxid-monoalkohole. Bevorzugte Beispiele für diese Produktgrup-pe sind Polypropylenglykolmonobutylether, Polyethylenglykolmonophenylether oder Polypropylenglykolmonokresylether mit 4 bis 12 Propylenoxideinheiten.

Andere gut geeignete Verdünnungsmittel (Schichtbildner) erhält man durch Umsetzung von Diglycidylethern oder Polyoxyalkylenglykolen mit linearen oder verzweigten aliphatischen oder aromatischen Monocarbonsäuren oder gegebenenfalls substituierten Monophenolen. Geeignete Beispiele hierfür sind das Reaktionsprodukt aus alpha-verzweigten gesättigten Monocarbonsäuren mit dem Digylcidylether des Poly-1,2-propylenglykols mit 9 bis 10 Propylenoxideinheiten oder aus tert.-Butylphenol mit dem Diglycidylether des Poly-1,2-butylenglykols.

Die Auswahl der Verdünnungsmittel (Schichtbildner) innerhalb der gesamten Gruppe kann z.B. nach folgenden Gesichtspunkten erfolgen:

1. Die Verbindungen sind flüssig und haben bei Reaktionstemperatur eine niedrige Viskosität, beispielsweise unter 200 mPa.s, bevorzugt unter 100 mPa.s. Sie sind mit Epoxidharzen und ihren Amin-Umsetzungsprodukten gut verträglich.

2. Sie sind begrenzt wasserlöslich, damit sie mit dem Film elektrophoretisch abgeschieden werden können. Die Löslichkeit in Wasser liegt bevorzugt bei 0,01 bis 20 Gewichtsteilen Verdünnungsmittel (Schichtbildner) auf 100 Gewichtsteile Wasser. Höhere Löslichkeiten sind unerwünscht, weil sie die Durchbruchsspannung senken; Substanzen mit geringer Löslichkeit zeigen nur eine geringe Wirkung auf den Schichtaufbau.

3. Die Substanzen sollen bei den Einbrennbedingungen in dünner Schicht nicht flüchtig sein. Sie haben beispielsweise einen Siedepunkt über 250°C, besonders bevorzugt über 300°C. Ihr Dampfdruck ist bei 20°C beispielsweise kleiner als $10^{-5}$ MPa (0,1 mbar), bevorzugt kleiner als $10^{-6}$ MPa (0,01 mbar) und speziell bei 50°C kleiner als $10^{-5}$ MPa (0,1 mbar). Niedrigsiedende Verdünnungsmittel (Schichtbildner) sind unerwünscht, weil sie während des Einbrennprozesses in die Abluft übergehen.

4. Durch die vorhandenen nukleophilen (reaktiven) Gruppen wird über den Vernetzungsmechanismus ein segmentartiger Einbau in den Film gewährleistet. Als nukleophile Gruppen werden bevorzugt mehr als eine Hydroxylgruppe, besonders mindestens 2 Hydroxylgruppen zur Reaktion mit blockierten Polyisocyanaten bereitgestellt.

Als basische Bindemittel B) werden z.B. die auf diesem technischen Gebiet bekannten bzw. üblichen tertiäre Aminogruppen enthaltenden Aminoepoxidharze mit einer Aminzahl von 30 bis 120 (mg KOH pro g Festharz) oder entsprechend 0,5 bis 2,7 Milliäquivalenten kationischer Gruppen pro g Festharz und einer Hydroxylzahl von 20 bis 300 oder 0,9 bis 8,9 Milliäquivalenten Hydroxylgruppen pro g Festharz verwendet. Amino-Epoxidharze, die nur tert.-Aminogruppen enthalten, werden bevorzugt.

Die obere Grenze der Aminzahl beträgt bevorzugt 120, besonders bevorzugt 100, die untere Aminzahl liegt bevorzugt bei 45, besonders bevorzugt bei 60. Ist die Aminzahl zu niedrig, so ist die Löslichkeit zu gering oder es entstehen durch einen zu hohen Neutralisationsgrad zu saure pH-Werte in den Elektrophoresebädern. Ist die Aminzahl zu hoch, so haftet der abgeschiedene Film schlecht oder es entsteht eine unruhige Oberfläche mit unterschiedlichen Schichtstärken.

Für die beim Einbrennen ablaufenden Vernetzungsreaktionen sind die im Molekül vorhandenen Hydroxylgruppen wesentlich. Ihre Zahl beträgt mindestens 2, bevorzugt mindestens 4 Hydroxylgruppen pro Molekül. Die obere Grenze der Hydroxylzahl ist 300 bevorzugt 250. Die untere Grenze der Hydroxylzahl liegt bevorzugt bei 60, besonders bevorzugt bei 120. Die Hydroxylzahl wird durch primäre und/oder sekundäre Gruppen gebildet. Bevorzugt liegen 20 bis 50 % der Hydroxylgruppen als primäre Hydroxylgruppen vor. Diese können endständig oder an lateralen Ketten sitzen. Ist die Hydroxylzahl zu niedrig, so entstehen schlecht vernetzte Filme, die noch in organischen Lösemitteln wie Aceton oder Methylethylketon löslich sind. Ist die Hydroxylzahl dagegen zu hoch, so wird der Film nach der Vernetzung zu spröde.

Der chemische Aufbau der Aminoepoxidharze und ihre Eigenschaften können in weitem Umfang variiert werden, beispielsweise durch

- die Auswahl der Epoxidharze und der Amine,
- die Anzahl der Amino- und Hydroxylgruppen,
- die Molmasse und das Molverhältnis von Basisharz und Vernetzer,
- das Verhältnis von harten und weichen Molekülsegmenten.

Die für die Herstellung der Aminaddukte verwendbaren Polyglycidylether von Bisphenolen sind aus der Literatur bekannt und im Handel erhältlich.

Hydroxylgruppenhaltige Aminoepoxidharze werden zweckmäßig aus Polyglycidylether

a) mit mindestens einer, bevorzugt zwei 1,2-Epoxidgruppen pro Molekül erhalten. Unter Polyglycidylether im Rahmen dieser Erfindung werden vorzugsweise solche Polyglycidylether der allgemeinen Formel verstanden

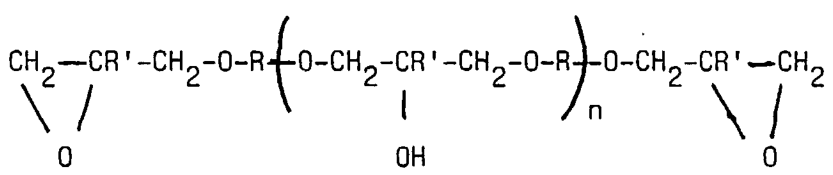

wobei n = 0 bis 4 und R ein cycloaliphatischer oder aromatischer Rest, bevorzugt eines Bisphenols oder hydrierten Bisphenols ist, z.B. der Rest eines Bisphenols folgender Struktur

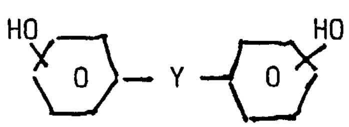

und Y = $-CH_2-$, -CO-, -S-, -SO-, $-SO_2$, $-C(CR'_3)_2-$ und R' = H oder/und $-C_mH_{2m+1}$, bevorzugt $CH_3$ ist, wobei m = 1 bis 4, und besonders bevorzugt von Bisphenol-A ist.

Die Aromatenringe können gegebenenfalls durch Halogene oder kurzkettige lineare oder verzweigte Alkylgruppen substituiert sein.

Besonders bevorzugt werden Polyglycidylether verwendet, die etwa zwei 1,2-Epoxidgruppen pro Molekül enthalten, mit einer mittleren Molmasse von 110 bis 2000, besonders über 300 und unter 1500, bevorzugt unter 1000, und einem Epoxidäquivalentgewicht von etwa 55 bis 750 besonders über 160 bis unter 500. Sie werden beispielsweise hergestellt durch Reaktion von Epihalogenhydrinen bzw. Methylepihalogenhydrinen, bevorzugt Epichlorhydrin, mit bevorzugt zweiwertigen Phenolen, wobei durch Auswahl der Molverhältnisse und Zusatz geeigneter basischer Katalysatoren, wie Ammonium- oder Phosphoniumsalzen die Molmasse eingestellt werden kann. Polyepoxide mit geeignetem Molekulargewicht werden entweder direkt unter Auswahl der Stöchiometrie zwischen Bisphenol und Epichlorhydrin oder durch Reaktion der monomeren Diglycidylverbindung mit weiterem Bisphenol hergestellt. Typische zweiwertige Phenole sind Hydrochinon, Resorcin, 1,5-Dihydroxynaphthalin, p,p'-Dihydroxydiphenylpropan, p,p'-Dihydroxybenzophenon, p,p'-Dihydroxydiphenylmethan, p,p'-Dihydroxydiphenylethan, p,p'-Dihydroxydi-tert.-butylphenylpropan oder Bis(2-hydroxynaphthyl)methan. Zur Einstellung geeigneter Epoxidäquivalente und Viskositäten kann mit kleinen Mengen monofunktioneller Verbindungen, die mit Epoxidgruppen reagieren, wie Monoalkylphenolen, Monocarbonsäuren oder Aminoalkoholen, die Kette abgebrochen werden.

Bevorzugt werden die technischen Mischungen, wie das p,p'-Dihydroxydiphenylpropan, besonders die 4,4'-Isomeren mit geringen Anteilen an 2,2' oder 4,2'-Isomer. Die beschriebenen Epoxidharze können auch teilweise hydriert sein, wie beispielsweise 1,4-Bis(-2,3'-epoxypropoxy)cyclohexan. Sie können jedoch auch durch Reaktionen mit Polyalkoholen, bevorzugt linearen oder verzweigten Diolen, wie Butandiol-1,4 oder Hexandiol- 1,6 in Gegenwart von geeigneten Katalysatoren, wie z.B. $BF_3$-Komplexe modifiziert sei. Die Epoxidharze können in Gemischen mit unterschiedlicher Struktur und Molmasse eingesetzt werden.

Als Polyglycidylether (a) können auch Umsetzungsprodukte von niedrigmolekularen flüssigen Polyglycidylethern mit Polyolen mit mindestens drei Hydroxylgruppen verwendet werden, wobei es sich um Diglycidylether handelt, die primäre OH-Gruppen enthalten.

Die Komponente b) bewirkt eine gute Schichtdickenausbildung im fertigen ET-Überzugsmittel. Weiterhin kann sie die Viskosität der Harzmischung bei der Reaktion vermindern. Unter b) werden Verbindungen verstanden, die endständig entweder Epoxid- oder Hydroxylgruppen aufweisen. Dabei handelt es sich z.B. um Umsetzungsprodukte aus niedermolekularen Mono- oder Polyglycidylverbindungen mit Polyoxyalkylenglykolen. Bevorzugt sind lineare difunktionelle Verbindungen.

Der Einbau von b) in die Komponente B) kann auf verschiedene Weise erfolgen:

1. Direkte Umsetzung mit aromatischen Epoxidharzen unter Zusatz von geeigneten basischen Katalysatoren. Diese Herstellungsweise wird nicht besonders bevorzugt, weil die niedermolekularen Amin-Katalysatoren im Harz verbleiben und der Einbau der Polyalkoxyglykole im allgemeinen nur unvollständig abläuft.

2. Veresterung der Komponente b), bevorzugt $C_3$-$C_5$ Alkylenglykole, und anschließende Umsetzung mit aromatischen Epoxidharzen. Als Vorprodukte dienen dabei die Reaktionsprodukte von einem Mol aliphatischer oder aromatischer Dicarbonsäure oder bevorzugt Phenolcarbonsäure pro Äquivalent Hydroxylgruppen des Polyalkoxyglykols. Anschließend werden die aromatischen Epoxidharze kettenverlängert mit den entstandenen Zwischenprodukten, wie beispielsweise mit den carboxylgruppenhaltigen "Bis-Estern" oder den modifizierten "Bisphenolen".

3. Der Einsatz von aliphatischen Polyglycidylethern der allgemeinen Formel

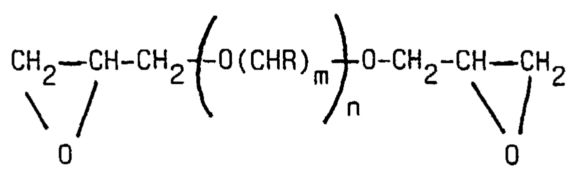

wobei R = H oder ein niedriger, gegebenenfalls mit verschiedenen Substituenten versehener Alkylrest mit beispielsweise 1 bis 4 C-Atomen ist und m = 2 bis 6, bevorzugt 3 bis 4, und n = 2 bis 20, bevorzugt über 4 und unter 15, bedeutet, wird bevorzugt.

Typische Beispiele hierfür sind die Reaktionsprodukte von Epichlorhydrin und den Polyetherdiolen von Ethylenglykol, 1,2-Propylenglykol, 1,2-und/oder 1,4-Butylenglykol mit verschiedenen Molmassen. Besonders bevorzugt werden Polypropylenglykoldiglycidylether aus 2 bis 20 Propylenoxideinheiten.

Niedrigmolekulare Diglycidylether mit 6 bis 14 Propylenoxidgruppen können durch Umsetzung mit Bisphenol A in höhermolekulare Produkte umgewandelt werden, die eine bessere Verträglichkeit mit Epoxidharzen besitzen und auch einen stärker segmentierten Aufbau mit niedrigeren Harzviskositäten ermöglichen. Die Verbindungen sind fest oder flüssig, bevorzugt sind es flüssige Komponenten.

In dem Epoxidharzgemisch sind beispielsweise weniger als 20 Gew.-%, bevorzugt weniger als 15 Gew.-%, besonders bevorzugt weniger als 10 Gew.% aliphatischer Polyglycidylether vorhanden.

Das Einführen der Aminogruppen erfolgt entweder durch Addition von NH-reaktiven Verbindungen an die

Epoxidgruppe oder durch Umsetzen der Hydroxylgruppe des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen. Dabei können die Aminogruppen entweder in a) oder in das Gemisch aus a) und b) oder in Reaktionsprodukte daraus eingeführt werden.

Aminogruppen werden bevorzugt durch Addition von NH-reaktiven Verbindungen an die Epoxidgruppen eingeführt. Die Umsetzung geschieht daher ungefähr im Äquivalenzverhältnis, gegebenenfalls mit einem kleinen Überschuß an Epoxidgruppen, um den Verbrauch für Nebenreaktionen zu kompensieren, bzw. einen vollständigen Einbau der Amine zu gewährleisten. Primäre Amine reagieren mit zwei Epoxidgruppen und führen dadurch zu einer Kettenverlängerung. Die Reaktion der Amine beginnt schon bei Raumtemperatur und ist im allgemeinen exotherm. Durch Erhöhen der Reaktionstemperatur auf z.B. 50 bis 150°C, ist sicherzustellen, daß nach Reaktionsende keine Epoxidgruppen mehr vorhanden sind. Es können alle Amine im Gemisch gleichzeitig mit den Epoxidgruppen umgesetzt oder es kann stufenweise vorgegangen werden, d.h. ein oder mehrere basische epoxidgruppenhaltige Zwischenprodukte können in verschiedener Reihenfolge hergestellt werden.

Für die Umsetzung mit den Epoxidharzen werden zweckmäßig Amine aus folgenden Gruppen ausgewählt

1. Mono- oder Dihydroxyalkylamine mit primären, sekundären oder tertiären OH-Gruppen der allgemeinen Formel

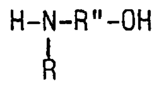

$H-N\ (R''-OH)_2$

wobei
-R = -H oder ein linearer oder verzweigter $C_1$ - $C_8$-Alkylrest, bevorzugt Methyl oder Ethyl und
-R"- ein gegebenenfalls substituierter Alkylenrest mit 2 bis 8 C-Atomen, der durch ein oder mehrere 0-Atome unterbrochen sein kann, bevorzugt Ethylen oder Propylen ist.
Amine dieses Typs verbessern durch ihre bevorzugt primären Hydroxylgruppen die Reaktivität des Basisharzes. Typische Beispiele hierfür sind Aminoethanol, N-Methyl-aminoethanol, N-Ethyl-aminoethanol, Diethanolamin, Aminoisopropanol, N-Methylaminoisopropanol, N-Methyl-amino-n-propanol, N-Ethyl-aminoisopropanol, Diisopropanolamin, 2,2'-Aminoethoxy-ethanol usw.

2. N,N-Dialkyl-aminoalkylamine der allgemeinen Formel

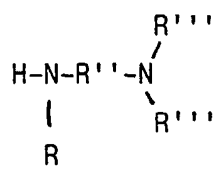

wobei
-R = -H oder -R'''
-R''- ein linearer oder verzweigter gegebenenfalls substituierter Alkylenrest mit 2 bis 8 C-Atomen, bevorzugt Ethylen oder Propylen und -R''' ein linearer oder verzweigter $C_1$-$C_8$-Alkylrest, bevorzugt Methyl oder Ethyl bedeutet, wobei die Reste R''' gleich oder verschieden sein können.
Amine dieses Typs verbessern durch die Dialkylamino-Gruppen die Basizität und damit die Löslichkeit des Basisharzes. Geeignete Beispiele hierfür sind N,N-Dimethylaminethylamin, N,N-Diethyl-N'-methyl-aminopropylamin, N,N-Diethylaminoethylamin, N,N-Dimethylaminopropylamin, N,N-Dimethylaminoneopentylamin usw.

3. Langkettige sekundäre Diamine, die unter Kettenverlängerung zur Elastifizierung verwendet werden, der allgemeinen Formel

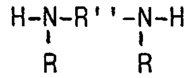

wobei
-R eine lineare oder verzweigte Alkylgruppe oder Hydroxyalkylgruppe mit 1 bis 18 C-Atomen und
-R''- eine lineare oder verzweigte Alkylengruppe oder Alkylenoxygruppe mit 2 bis 12 C-Atomen bedeuten.

Das sekundäre Diamin kann auch durch Reaktion des entsprechenden primären Alkylendiamins mit Glydidylethern oder Glycidylestern hergestellt werden. Typische Beispiele sind N,N'-Dialkyl-diaminoalkene wie N,N'-Dimethyldiaminohexan oder bevorzugt das Reaktionsprodukt aus Hexandiamin oder 2-Methyl-pentandiamin mit 2 Mol Glycidylether von alpha-verzweigten Monocarbonsäuren, wie Trimethylessigsäure, Isooctansäure oder Versaticsäure$^{R}$. Eine Verlängerung der elastifizierenden Kette kann man unter Bildung von Harnstoffgruppen durch Umsatz von 2 Molekülen der oben beschriebenen sekundären Diamine mit 1 Mol Diisocyanat erhalten. Das sekundäre Diamin kann auch asymmetrisch aufgebaut sein, wenn die beiden Substituenten ungleich sind. Beispielsweise kann das Diamin ein Reaktionsprodukt von N-Hydroxethyl-Ethylendiamin oder N-Dimethylaminoethyl-propylendiamin mit Cardura $E^{R}$ sein. Zur weiteren Modifizierung der Epoxidharze können auch primäre Monoalkylamine und/oder bevorzugt sekundäre Dialkylamine wie Diethylamin, n-Octylamin, N-Methyl-N-ethylhexylamin, Didodecylamin oder Methoxypropylamin in geringen Mengen mitverwendet werden.

Die für den Vernetzungsprozeß wichtigen primären und/oder sekundären Hydroxylgruppen können gegebenenfalls anteilweise durch primäre und/oder sekundäre Aminogruppen ersetzt werden. Die erfindungsgemäß eingesetzten Aminoepoxidharze werden bevorzugt so eingeführt, daß sie nur tertiäre Aminogruppen enthalten. Es ist jedoch grundsätzlich möglich, mit Hilfe von Ketiminen primäre Aminogruppen in das Harzgerüst in bekannter Arbeitsweise einzubauen. Aminoepoxidharze mit tertiären Aminogruppen werden bevorzugt, weil sie keine Ketone durch Hydrolyse der Ketimine in der KTL-Dispersion bilden, die abdestilliert werden müssen.

Werden Aminoepoxidharze mit Diisocyanaten oder isocyanatgruppenhaltigen Präpolymeren verknüpft, so entsteht eine Molekülvergrößerung unter Urethangruppenbildung. Setzt man OH-gruppenhaltige Epoxidharze mit Diisocyanaten um, so tritt eine Erhöhung der Epoxidharz-Funktionalität auf, die bei der weiteren Umsetzung beachtet werden muß, um Gelierungen zu vermeiden.

Die Komponente I, die die vorstehend beschriebenen fremdvernetzenden, aminogruppenhaltigen Kunstharzbindemittel B) enthält, wird zusammen mit Vernetzungsmitteln eingesetzt, die nachfolgend als Komponente II bezeichnet werden. Das Mischungsverhältnis der Komponenten I und II kann im Überzugsmittel in weiten Grenzen schwanken. Gemäß dem Stand der Technik werden dabei auf 50 bis 95 Gew.-% der Komponente I 50 bis 5 Gew.-% Vernetzungsmittel II bezogen auf Festharz eingesetzt. Das bevorzugte Mischungsverhältnis von I und II liegt zwischen 90 zu 10 und 60 zu 40 und wird empirisch aus den optimal erreichbaren anwendungstechnischen Eigenschaften bei der gegebenen Einbrenntemperatur bestimmt. Die Vernetzungsmittel können zur besseren Handhabung einen Gehalt von 10 bis 30 Gew.-% wasserverdünnbarer organischer Lösemittel, wie z.B. Alkohole und Glykolether, enthalten. Verwendet man 100 %ige Vernetzer, so sind lösemittelfreie Dispersionen herstellbar.

Als Vernetzungsmittel (Komponente II) werden teilweise oder vollständig blockierte Polyisocyanate, umesterungs- oder umamidierungsfähige Härter, Amin- und Phenol-Formaldehydharze, zur Michael-Addition fähige Vernetzer mit aktiviertem Wasserstoff und/oder Vernetzer mit endständigen, aktivierten Doppelbindungen eingesetzt. Das Vernetzungsmittel hat zweckmäßig eine mittlere Molmasse ($M_n$) von 250 bis 5000, speziell über 500 und unter 3000. I und II können kalt oder in der Wärme gemischt und dabei auch insbesondere bei erhöhten Temperaturen präkondensiert werden. Dabei reagieren die Komponenten I und II in gewissem Umfang miteinander, ohne daß das Gemisch seine Hitzehärtbarkeit und die Eigenschaft durch Protonisieren mit Säuren wasserlöslich gemacht werden zu können, verliert.

Als Komponente II werden bevorzugt vollständig blockierte Polyisocyanate eingesetzt, die übliche Katalysatoren enthalten können. Es kann günstig sein, die blockierten Polyisocyanate mit anderen Vernetzern zu vermischen. Das Äquivalentverhältnis von Hydroxylgrupen der Komponente I zu den blockierten Isocyanatgruppen der Komponente II liegt im Bereich von 1 : 0,1 bis 1,5, vorzugsweise bei 1 : 0,7 bis 1,2 und beträgt besonders bevorzugt 1 : 1.

In einer speziellen Arbeitsweise werden I und II zu einem selbstvernet-zenden Aminoepoxidharz kombiniert. Hierzu werden alle Isocyanatgruppen eines Polyisocyanats bis auf eine Isocyanatgruppe blockiert. Dieses "Monoisocyanat" setzt man mit Hydroxylgruppen oder gegebenenfalls NH-reaktiven Aminogruppen des Aminoepoxidharzes vor dem Neutralisieren, bzw. Dispergieren in Wasser um. Dabei werden die reaktiven Gruppen gleichmäßiger verteilt und beim Einbrennen treten geringere Abspaltverluste auf. Bei Verwendung von Diisocyanaten mit unterschiedlicher Reaktionsfähigkeit ist es auch möglich, das Aminoepoxidharz zuerst mit der reaktiveren Isocyanatgruppe umzusetzen und dann die reaktionsträgere Isocyanatgruppe mit einem Blockierungsmittel umzusetzen.

Der Verzicht auf den belastenden Destillationsschritt ermöglicht den Einsatz von lösemittelfreien und empfindlicheren, reaktiveren Vernetzern. Bei der Polyisocyanatkomponente II handelt es sich bevorzugt um beliebige organische Polyisocyanate mit aliphatisch, cycloaliphatisch, araliphatisch und/oder aromatisch gebundenen Isocyanatgruppen mit einer mittleren NCO-Funktionalität von 1,5 bis 5, bevorzugt über 2 und unter 3, die durch Blockierungsgruppen gegen Reaktionen mit Wasser geschützt sind. Bevorzugt handelt es sich bei der Polyisocyanatkomponente B) um wenig flüchtige aromatische Polyisocyanate mit höherem Molekulargewicht oder um

Polyisocyanate oder Polyisocyanatgemische mit ausschließlich aliphatisch und/oder cycloaliphatisch gebundenen Isocyanatgruppen.

Die organischen Polyisocyanate weisen eine mittlere Molmasse von 112 bis 5000, bevorzugt über 140 bis unter 1000, und zweckmäßig eine mittlere Isocyanatfunktionalität von 2 bis 8 auf. Geeignete Polyisocyanate sind beispielsweise Verbindungen der idealisierten Formel

$$W(N = C = 0)_p$$

in welcher W für einen aromatischen, gegebenenfalls mit einem oder mehreren linearen oder verzweigten Alkylgruppen substituierten oder Methylenbrücken aufweisenden Kohlenwasserstoffrest mit insgesamt 6 bis 15 Kohlenstoffatomen, einen aliphatischen Kohlenwasserstoffrest mit 2 bis 18, vorzugsweise über 6 bis 10 Kohlenstoffatomen, einen cyclischen Kohlenwasserstoffrest mit 6 bis 15 Kohlenstoffatomen oder einen heterocyclischen Ring und p für eine Zahl von 2 bis 4, vorzugsweise über 2 bis 3, steht.

Typische Beispiele für derartige Polyisocyanate sind Propylendiisocyanat, Ethylethylendiisocyanat, Dimethylethylendiisocyanat, Trimethylendiisocyanat, Tetramethylendiisocyanat, Pentamethylendiisocyanat, Hexamethylendiisocyanat, Trimethyl-hexandiisocyanat, 1,12-Dodecandiisocyanat, 1,18-Octadecan-diisocyanat, Cyclopentandiisocyanat, Cyclohexan-1,3- und -1,4-diisocyanat, sowie beliebige Gemische dieser Isomeren, Methyl-cyclohexandiisocyanat, m- oder p-Tetramethylxyloldiisocyanat, 3(4)-Isocyanatomethyl--1-methylcyclohexylisocyanat, 1-Isocyanato-3,3,5-trimethyl-5-isocyanatomethylcyclohexan, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Xylylendiisocyanat, Diphenylmethan-2,4'- und/oder -4,4'-Diisocyanat, 3,2'- und/oder 3,4'-Diisocyanato-4-methyldiphenylmethan, Bisphenylendiisocyanat, Naphthylen-1,5-diisocyanat, Triphenylmethan-4,4',4''triisocyanat, 2,2',4,4'-Tetraisocyanato-5,5'-dimethyltriphenylmethan, Diphenyltetraisocyanat oder Naphthyltetraisocyanat. Gemischt aliphatische/aromatische Verbindungen sind auch geeignet. Besonders bevorzugt werden großtechnisch erzeugte Diisocyanate wie Toluylendiisocyanat, Hexandiisocyanat, Diphenylmethandiisocyanat, Isophorondiisocyanat oder Dicyclohexylmethandiisocyanat oder Tetramethylxylylendiisocyanat.

Als Polyisocyanate sind besonders gut die sogenannten "Lackpolyisocyanate" geeignet, die aus bekannten Diisocyanaten hergestellt werden. So entsteht aus Hexandiisocyanat und Wasser das Tris-(6-isocyanatohexyl)-biuret. Durch Trimerisation von Hexandiisocyanat erhält man Tri-(6-isocyanatohexyl)-isocyanurat, gegebenenfalls im Gemisch mit seinen höheren Homologen, sowie weiteren aus Isophorondiisocyanat, Diisocyanatotoluol oder Gemischen aus Diisocyanatotoluol und Hexamethylendiisocyanat aufgebauten Isocyanuratgruppen aufweisenden Polyisocyanaten. Insbesondere bevorzugt werden Gemische aus Uretdion- und/oder Isocyanatgruppen aufweisende Polyisocyanate auf der Basis von Hexamethylendiisocyanat, wie sie durch katalytische Oligomerisierung von Hexamethylendiisocyanat unter Verwendung von Trialkylphosphinen entstehen.

Um die Stabilität der Komponente II in der wäßrigen Dispersion zu verbes-sern, kann das Polyisocyanat zumindest anteilweise mit Polyethylenoxidalkohol oder ionischen Gruppen modifiziert werden. Sehr gut einsetzbare Polyisocyanate sind auch die Urethangruppen aufweisenden Polyisocyanate, die beispielsweise durch Umsetzung von überschüssigen Mengen an 2,4-Diisocyanatotoluol mit mehrwertigen Alkoholen der Molmasse 63 bis 300, insbesondere Trimethylolpropan und gegebenenfalls destillativer Entfernung des nicht umgesetzten Diisocyanatüberschusses erhalten werden können.

So werden beispielsweise blockierte Triisocyanate oder blockierte höhermolekulare Reaktionsprodukte von Triisocyanaten mit Dialkoholen, wie beispielsweise Di- oder Tripropylenglykol oder Dialkylaminalkylendiol, wie z.B. N-Methyldiethanolamin, besonders bevorzugt.

Eine weitere Gruppe von geeigneten aliphatischen Polyisocyanaten kann beispielsweise durch selektive Reaktion silylierter Polyalkohole mit Isocyanatocarbonsäurechloriden hergestellt werden. Beispiele für solche estergruppenhaltige Polyisocyanate sind solche auf der Basis von Hexandiisocyanat und Pentaerythrit. Sie weisen besonders günstige niedrige Viskositäten auf.

Polyisocyanate sind verkappt oder blockiert, wenn sie mit Wasser oder den aktiven Wasserstoffatomen des Basisharzes (Hydroxylgruppen oder Aminwasserstoffgruppen) bei normalen Lagertemperaturen nicht reagieren. Wird der beschichtete Gegenstand jedoch auf eine Temperatur erwärmt, die ausreichend ist, um die Verkappung des Isocyanats aufzuheben, so tritt die Vernetzung bzw. Härtung des Überzugs zu einem schützenden, unlöslichen Film auf.

Als verkappte Isocyanate können beliebige Isocyanate verwendet werden, bei denen die Isocyanatgruppen mit einer einwertigen, flüchtigen Verbindung umgesetzt worden ist, die mit aktivem Wasserstoff z.B. bei erhöhter Temperatur, wie z.B. 90 bis 200°C reagieren. Blockierte Polyisocyanate werden beispielsweise dadurch hergestellt, daß man ein multifunktionelles Isocyanat mindestens mit einer stöchiometrischen Menge an einer monofunktionellen, aktiven Wasserstoff (Zerwitinoff-Reaktion) enthaltenden Verbindung zweckmäßig bei Temperaturen von 50 bis 80°C umsetzt, wobei gegebenenfalls übliche Katalysatoren, wie basische Katalysatoren, beispielsweise tertäre Amine oder geringe Mengen an Zinnsalzen, beispielsweise Dibutylzinndilaurat, zugegeben werden können. Die Isocyanatgruppe wird auf diese Weise bei Raumtemperatur gegen Reaktionen mit Wasser oder Alkoholen geschützt. Sie spaltet sich bei Einbrenntemperaturen von weniger als 210°C, vorzugsweise weniger als 190°C, besonders unter 180°C, andererseits über 110°C, vorzugsweise über 120°C, besonders bevorzugt über 140°C, wieder ab, damit die freiwerdende Isocyanatgruppe mit dem Hydroxylgruppen enthaltenden Aminoepoxidharz reagieren kann.

Mittel, die die Isocyanate blockieren, enthalten nur eine einzige Amin-, Amid-, Imid-, Lactam-, Thio- oder Hydroxylgruppe. Im allgemeinen werden flüchtige, aktiven Wasserstoff enthaltende Verbindungen mit niedrigen Molmassen, vorzugsweise von nicht mehr als 300, bevorzugt von nicht mehr als 200, verwendet. So haben sich beispielsweise bewährt aliphatische oder cycloaliphatische Alkohole, wie n-Butanol, 2-Ethylhexanol, Cyclohexanol; Phenole, wie tert.Butylphenole; Dialkylamine, wie Diethylamin; Di-alkylaminoalkohole wie Dimethylaminoethanol; Oxime wie Methylethylketoxim; Lactame wie epsilon-Caprolactam oder Pyrrolidon-2; Imide wie Phthalimid oder N-Hydroxymaleinimid, Hydroxyalkylester; CH-azide Verbindungen, wie Malonsäure- oder Acetessigsäureester; stickstoffhaltige Heterocyclen, wie z.B. Alkylpyrazole oder Alkyltriazole und ungesättigte Alkohole, wie Hydroxyethylacrylat oder Hydroxypropylmethacrylat. Es werden aber auch beta-Hydroxylglykole oder -glykolether und Glykolamide empfohlen. Oxime und Lactone sind als Verkappungsmittel von besonderem Interesse, weil die damit verkappten Polyisocyanate bei relativ niedriger Temperatur reagieren. Zur Blockierung können auch mehr als eine Art von Schutzgruppen, bevorzugt solche mit unterschiedlicher Reaktivität, verwendet werden.

Das vollblockierte Polyisocyanat wird im allgemeinen durch das neutralisierte Aminoepoxidharz stabil in der wäßrigen Dispersion einemulgiert gehalten. Bei relativ hohen Mengen ist es jedoch nützlich, in das blokkierte Polyisocyanat mit Hilfe von Polyalkylenglykolen, speziell Polyethylenglykolen oder von basischen Stickstoffatomen die Wasserdispergierbarkeit zu verbessern. Das geschieht beispielsweise durch Reaktion der Isocyanate mit tertiäre Aminogruppen enthaltenden Polyalkoholen wie N-Methyl-diethanolamin, Triethanolamin oder tertiäre Aminogruppen enthaltenden Polyaminen wie 3-(Methyl)-3-(2-aminoethyl)-aminopropylamin. Während hierbei eine Molekülvergrößerung auftritt, kann die Blockierung der Isocyanatgruppe auch mit monofunktionellen Verbindungen mit tertiären Aminogruppen erfolgen. Hierzu dienen beispielsweise N,N-Dialkylaminoalkohole wie N,N-Dimethyl-aminoethanol oder N,N-Dialkylalkylendiamine wie N,N-Dimethylaminopropylamin oder N,N-Diethyl-N'-methyl-1,3-ethandiamin.

Die Vernetzung der Aminoepoxidharze mit blockierten Polyisocyanaten kann gegebenenfalls durch Zusatz von 0,01 bis 2 Gew.-%, speziell 0,5 bis 1 Gew.-%, bezogen auf Festharz an Katalysatoren, wie stark basischen tertiären Aminen und/oder aktiven Metallverbindungen, beschleunigt werden. Eine besondere, manchmal synergistische Wirkung wird erreicht durch die Kombination von basischem Medium der abgeschiedenen Harze und den Metallsalzen von Wismut, Blei, Kobalt, Eisen, Antimon und/oder Zinn-II und Zinn-IV-Verbindungen. Besonders bevorzugt werden Katalysatoren wie Eisen-III-acetylacetonat, Zinkacetylacetonat, Dibutylzinndilaurat, Di-n-butylzinnoxid, Dibutyl-zinndioctyl-maleat, Zinnoctoat, Zinnoleat, Tetrabutyltitanat und/oder Cobalt-2-ethylhexanoat. Bevorzugt sind Katalysatoren, die im ET-Bad nur bedingt löslich sind, sich in fein verteilter Form mit dem Lack elektrophoretisch abscheiden und sich im Film ohne Verlaufsstörungen beim Einbrennen gleichmäßig verteilen lassen. Sind ungesättigte Doppelbindungen im Harz enthalten, so können auch die üblichen Metallsikkative gegebenenfalls in Emulsionsform zur Verbesserung der Härtungseigenschaften zugegeben werden.

Durch Protonisieren mit organischen oder anorganischen Säuren im Verfahrensschritt III wird das kationische Kunstharz-Bindemittel im Gemisch mit dem Vernetzungsmittel in an sich bekannter Weise wasserverdünnbar gemacht. Eine teilweise oder vollständige Neutralisation der Aminogruppen kann mit wasserlöslichen Säuren vor dem Verdünnen mit Wasser erfolgen. Man kann die wasserlöslichen Säuren aber auch ganz oder teilweise vor dem Verdünnen mit notwendigen Wasseranteilen vermischen, so daß die Neutralisation erst bei der Verdünnung erfolgt. Im allgemeinen wird nur soviel Säure zugegeben, daß das Bad die erforderliche Stabilität besitzt und keine Ausfällungen auftreten. Geeignete Säuren sind beispielsweise Ameisensäure, Essigsäure, Propionsäure, Dimethylolpropionsäure, Milchsäure, Zitronensäure, Malonsäure, Acrylsäure, Phosphorsäure und/oder Alkylphosphorsäure. Flüchtige, monobasische niedrigmolekulare organische Carbonsäuren werden bevorzugt. Ein Überschuß an Säure, d.h. ein Neutralisationsgrad über 100 %, ist zweckmäßig zu vermeiden. Der MEQ-Wert (Milliäquivalente Säure pro 100 g Festharz) liegt im allgemeinen zwischen 20 bis 80. Es wird eine lagerstabile Dispersion mit möglichst niedrigem MEQ-Wert angestrebt.

Das Herstellen der wäßrigen Dispersion kann nach bekannten Verfahren erfolgen. Beispielsweise ist es möglich, die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, z.B. werden in bekannten Aggregaten, z.B. einem Rotor-Statormischer, gleichzeitig Harz, Wasser und Neutralisationsmittel homogen zusammengemischt. Die Überführung in die Wasserphase kann durch erhöhte Temperatur unterstützt werden.

Durch Verdünnen mit destilliertem oder entionisiertem Wasser auf einen Festkörper von 30 bis 45 Gew.-% kann eine leichtfließfähige, dünne wäßrige Dispersion erhalten werden, die gut transportierbar ist, mit einer Pigmentpaste gemischt und auf den Verarbeitungsfestkörper weiter verdünnt werden kann. Unter Dispersion wird hierbei ein wäßriges opaleszierendes bis trübes Zweiphasensystem verstanden, in welchem das Harz die disperse Phase und das Wasser die kontinuierliche Phase bildet. Die mittlere Teilchengröße liegt unter 500 nm, bevorzugt unter 400 nm und besonders bevorzugt unter 300 nm. Einem solchen Bindemittel kann man als Hilfsmittel bei der Zugabe des blokkierten Polyisocyanates, aus Verlaufsgründen oder zur Beeinflussung der Oberflächenquantität definierte Mengen an Lösemitteln wieder zusetzen. Der Gehalt an organischen Lösemitteln sollte dabei möglichst niedrig gehalten werden, beispielsweise unter 4 Gew.-%, bevorzugt unter 3 Gew.-%, besonders bevorzugt unter 2 Gew.-% im ET-Bad. Als Lösemittel dienen Alkohole, Glykolether, Ketoalkohole, aber auch aliphatische und/oder aromatische Kohlenwasserstoffe verschiedener Kettenlänge. Mit steigendem Lösemittelgehalt verschlechtert sich der Umgriff und es können Überbeschichtungen auftreten. Wasserunlösliche Lösemittel wirken hierbei stärker als wasserlösliche.

Verdünnt man das erfindungsgemäß eingesetzte Aminoepoxidharz ohne Zusatz von Vernetzungsmitteln nach Neutralisieren mit Monocarbonsäuren auf einen solchen Festkörper, daß eine viskose Bindemittelpaste entsteht, so kann man das entstehende Produkt auch zum Anreiben von Pigmenten gebrauchen. Die Herstellung eines Elektrotauchlacks erfolgt dann durch Kombination der Pigmentpaste mit der erfindungsgemäßen Bindemitteldispersion.

Es können jedoch zur Herstellung von Pigmentzubereitungen auch andere übliche Pigmentpasten aus Pigmenten und Pastenharzen oder mit Lösemitteln hergestellte Pigmentpasten verwendet werden. Die Pastenharze werden in einer Menge von 0 bis 20, bevorzugt über 0,5 bis 20 Gew.-Teilen auf 100 Teile Dispersionsharz, bevorzugt über 2 bis 10 Gew.-Teile, eingesetzt.

Aufgrund der geringen Harzmenge sind die Pigmentpasten zur Filmbildung allein nicht ausreichend. Sie können in Wasser löslich oder dispergierbar sein. Sie können ionische Gruppe enthalten oder ohne ionische Gruppen vorliegen. Bevorzugt weisen die Pastenharze funktionelle Gruppen auf, über die sie mit den filmbildenden Harzen vernetzen können. Dabei sollen sie gut verträglich mit den Bindemitteln des wäßrigen Überzugsmittels sein und die Eigenschaften der Bindemittelmischung nicht verändern.

Die Anreibebindemittel sollen in wäßriger Dispersion vorliegen und nur geringe Anteile von Lösemittel enthalten. Bei den Pastenharzen handelt es sich beispielsweise um Bindemittel auf der Basis von Epoxidharzen, Alkydharzen, Polyurethanharzen, Poly(meth)acrylatharzen oder auf Basis von Polyethern. Außerdem können nicht-ionische Anreibebindemittel z.B. auf Basis eines linearen oder verzweigten Polyethylenglykols oder eines Polypropylenglykols oder eines Polypropylenglykols mit endständig aufgepfropften Ethylenoxidanteilen hergestellt werden. Beispiele für Pastenharze werden in der DE-A-26 34 211, DE-A-26 34 229, DE-A-34 31 532, EP-A-0 108 088, EP-A-0 183 025 oder in der EP-A-0 270 877 beschrieben.

Beispiele für verwendbare nicht-ionische Pastenharze oder Netzmittel sind in den DE-A-30 18 715, 36 41 699 und 26 06 831 beschrieben. Sie enthalten nicht-ionische Harzanteile wie beispielsweise Polyalkylenglykole, die ein gutes Benetzungsvermögen für Pigmente und Füllstoffe besitzen sollen. Sie sind allein nicht an der Kathode abscheidbar, sondern werden nur zusammen mit dem Bindemittelsystem abgeschieden.

Ionische Pastenharze besitzen basische funktionelle Gruppen, die nach Neutralisation mit Säure diese wasserdispergierbar machen oder wasserlösliche Onium-Gruppen wie z.B. quartäre Stickstoffatome. Über die Anzahl dieser neutralisierten oder ionischen Gruppen wird die Löslichkeit der Anreibebindemittel beeinflußt.

Aus den bekannten Pastenharzen können Pigmentpasten hergestellt werden, wie in der EP-A-0 183 025 beschrieben. Beispielsweise kann man so vorgehen, daß zu dem Pastenharz demineralisiertes Wasser zugegeben wird, und unter Rühren deckende oder transparente Pigmente, Füllstoffe, Katalysatoren, Korrosionsschutzpigmente, anorganische oder organische Farbpigmente und weitere Additive zugegeben werden. Als Additive sind z.B. Entschäumer, Netzmittel, Verlaufsadditive oder Antikratermittel zu verstehen.

Nach Homogenisieren dieser Mischung wird die Viskosität eingestellt und danach auf einem üblichen Mahlaggregat, z.B. einer Perlmühle, auf die notwendige Kornfeinheit vermahlen. Die entstehenden Pigmentpasten sind wäßrig, pumpbar und weisen eine gute Lagerstabilität auf. Sie werden mit der erfindungsgemäßen wäßrigen Bindemitteldispersion, bevorzugt unmittelbar am Elektrotauchbecken, gemischt.

Der Feststoffgehalt des Überzugsmittels gemäß der Erfindung beträgt nach Verdünnen mit Wasser zweckmäßig 5 bis 60 Gew.-%. Beim Einstellen des Lackes auf einen höheren Festkörper von 25 bis 50 Gew.-%, bevorzugt von 30 bis 45 Gew.-% werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 25 Gew.-%, so ist der Lack für die elektrophoretische Abscheidung geeignet. Der pH-Wert des Lackes liegt im allgemeinen zwischen 4,0 und 8,0, vorzugsweise zwischen 6,0 und 7,5.

Der an der Kathode zu beschichtende Gegenstand und die Anode werden in das ständig umgewälzte wäßrige Bad eingetaucht. Es können alle metallisch leitenden Werkstücke beschichtet werden, wie Kupfer, Aluminium, Zinn,

Zink, Eisen oder Legierungen dieser Metalle, aber auch mit dünnen metallischen Schichten versehene isolierende Werkstoffe, wie Glas, Keramik oder Kunststoff. Während des Abscheidens wird das Bad bei Temperaturen von etwa 15 bis 35°C gehalten. Festkörper, Abscheidetemperatur und -zeit sowie -spannung werden so gewählt, daß die gewünschte Schichtstärke nach Einbrennen bei Temperaturen von 120 bis 200°C erhalten wird. Die übliche Abscheidespannung beträgt zwischen 50 bis 500 V. Dabei wird das wasserverdünnbare Elektrotauchlacküberzugsmittel an der Kathode als dünne Schicht koaguliert.

Die erfindungsgemäßen Lacke sind besonders für die Elektrotauchlackierung von Metallen geeignet und ergeben wäßrige lösemittelarme Dispersionen. Aufgrund des erfindungsgemäßen Verfahrens können auf wirtschaftliche Weise, lösemittelarme, wäßrige KTL-Dispersionen hergestellt werden, die in Kombination mit pigmentierten Pastenharzen hervorragende Elektrotauchlackbäder bilden. Bei der Herstellung der Dispersionen fallen keine Lösemitteldestillationsschritte an und keine zu vernichtenden Lösemittelgemische. Es gelingt durch den chemischen Aufbau die Probleme der Schichtstärkeausbildung zu lösen, ohne daß Beeinträchtigungen in den übrigen anwendungs technischen Eigenschaften auftreten. Die Schutzeigenschaften der vernetzten Filme aus den erfindungsgemäß hergestellten Überzugsmittel entsprechen den bekannten Systemen.

In den folgenden Beispielen beziehen sich Prozentangaben auf das Gewicht.

<u>**Beispiel 1:**</u>

In einem 6-Liter-Reaktionsgefäß mit einem langsam laufenden Rührwerk für hohe Viskositäten, elektrischer Heizung und Thermometer wurden unter Inertgas 722,6 g flüssiges Epoxidharz auf Bisphenol-A-Basis (Epoxy-Äquivalent = 188) und 104,2 g Polypropylenoxiddiglycid (Epoxy-Äquivalent = 317) mit 230,6 g Bisphenol A gemischt und auf 125°C aufgeheizt. Nach Zusatz von 0,42 g Ethyl-triphenyl-phosphoniumjodid wurde die Temperatur gehalten bis das Epoxy-Äquivalentgewicht nicht mehr ansteigt. Es wurde noch eine Stunde bei 135°C gehalten, dann auf 80°C gekühlt und mit 154,7 g eines propoxylierten Kresoles (Hydroxylzahl 117) verdünnt. Bei 66°C wurden in 30 Minuten 76,4 g Diethanolamin zugegeben und anschließend 20 Minuten bei ca. 72°C gehalten. Nach Zusatz eines Gemisches aus 42,2 g Diethylaminoethylamin und einem Reaktionsprodukt aus 41,6 g Methylpentandiamin und 182,7 g Glycidylester der Versaticsäure wurde auf 120 bis 125°C aufgeheizt und diese Temperatur 2 Stunden lang gehalten.

Nach Abkühlen auf 110°C wurden 1540 g des erhaltenen Aminoepoxidharzes mit 733 g einer 70 %igen Butylglykol-Lösung von mit Caprolactam verkappten Desmodul $L^R$ vermischt, bei 100°C mit 59 g 50 %ige Ameisensäure neutralisiert und dann portionsweise solange mit Wasser verdünnt bis eine trübe, dünnflüssige KTL-Dispersion entsteht. Es wurden folgende Kennwerte gemessen:

| | |
|---|---|
| Festkörper (30 Min. Erwärmen 150°C) = | 38,0 % |
| MEQ-Wert = | 31 |
| pH-Wert = | 6,4 |
| Restlösemittelgehalt = | 3,4 % |
| mittlere Teilchengröße = | 96 nm |

Bei Verdünnung der vorstehend erhaltenen Dispersion auf den für die Elektrotauchlackierung üblichen Festkörpergehalt von 18 Gew.-% beträgt der Restlösemittelgehalt 1,6 %, bezogen auf die gesamte Dispersion.

<u>**Beispiel 2:**</u>

In einem doppelwandigen 6-Liter-Reaktionsgefäß mit randgängigem Wendel-rührer, indirekter Heizung und Thermometer wurden unter Inertgas und langsamem Rühren 89,2 g eines Reaktionsproduktes von 1 Mol Polypropylenoxiddiglycid (EP.-Äquivalent = 317) mit 2 Molen Versaticsäure eingefüllt. Danach wurden 1112 g eines Epoxidharzes auf Basis Bisphenol A (EP.-Äquivalent = 469) und 113,4 g eines Reaktionsproduktes aus Polypropylenoxiddiglycid und Bisphenol A (EP.-Äquivalent 469) zugegeben und vorsichtig aufgeheizt, bis die Rührung eingeschaltet werden konnte und alles homogen aufgeschmolzen war. Nach Abkühlen auf 68°C wurden 62,3 g N-Methylethanolamin in 25 Minuten zugetropft, wobei die Temperatur bis auf 76°C anstieg. 20 Minuten später wurde ein Gemisch aus 42,3 g N-Dimethylaminopropylamin und einem Reaktionsprodukt aus 46,7 g Hexandiamin-1,6 mit 209 g Glycidylester der Versaticsäure zugegeben, auf 125°C aufgeheizt und diese Temperatur eine weitere Stunde gehalten.

Nach Abkühlen auf 110°C wurden 1680 g des erhaltenen Aminoepoxidharzes mit 900 g einer 80 %igen Butylglykol-Lösung von mit Oxim verkapptem Isophorondiisocyanat-isocyanurat gemischt und bei ca. 95°C mit 57,4 g 50 %iger Ameisensäure neutralisiert. Anschließend wurde bei ca. 80°C langsam kontinuierlich mit soviel Wasser verdünnt, daß eine fließfähige trübe Dispersion entstand mit einem

| | |
|---|---|
| Festkörper (30 Min. 150°C) = | 35,6 % |

| | |
|---|---|
| MEQ-Wert = | 30 |
| pH-Wert = | 6,8 |
| Restlösemittelgehalt = | 2,6 % |
| mittlere Teilchengröße = | 115 nm |

Bei Verdünnung der vorstehend erhaltenen Dispersion auf den für die Elektrotauchlackierung üblichen Festkörpergehalt von 18 Gew.-% beträgt der Restlösemittelgehalt 1,3 %, bezogen auf die gesamte Dispersion.

## Patentansprüche

**1.** Wäßrige Dispersionen von hydroxylgruppenhaltigen, zumindest teilweise neutralisierten Aminoepoxidharzen und Vernetzern, mit einem Festkörpergehalt von 30 bis 45 Gew.-% und Teilchengrößen der dispergierten Phase von bis zu 1000 nm und einem Lösemittelgehalt von 0 bis 5 Gew.-% erhältlich durch Vermischen oder zumindest teilweises Prekondensieren im lösemittelarmen Zustand, bei Temperaturen von 50 bis 140°C, von

I. 95 bis 50 Gew.-% eines oder mehrerer im wesentlichen lösemittelfreier hydroxylgruppenhaltiger Aminoepoxidharze mit tertiären Aminogruppen mit einer Aminzahl von 30 bis 120, einer Hydroxylzahl von 20 bis 300 und einem Zahlenmittel der Molmasse von 1000 bis 20000, die im Gemisch mit bis zu 15 Gew.-%, bezogen auf den Harzfestkörpergehalt der gesamten Komponente I, mit einem oder mehreren begrenzt wasserlöslichen, flüssigen, bei Einbrenntemperatur nicht flüchtigen Verdünnungsmitteln auf der Basis von Polyoxyalkylendiolen mit mindestens zwei Alkylenoxideinheiten im Molekül, die mindestens eine nukleophile Gruppe zur Reaktion mit der Vernetzerkomponente II enthalten, vorliegen können, wobei die Aminoepoxidharze oder das Gemisch mit den Verdünnungsmitteln im Durchschnitt 0,3 bis 5,0 mMol/g Alkylenoxideinheiten aufweisen, mit

II. 5 bis 50 Gew.-% eines oder mehrerer Vernetzer, und

III. Neutralisieren des erhaltenen Gemischs bei Temperaturen von 60 bis 95°C, mit 0,1 bis 1,0 mMol/g einer oder mehrerer Monocarbonsäuren pro g Aminoepoxidharz, und Dispergieren bei diesen Temperaturen in Gegenwart von Wasser.

**2.** Verfahren zur Herstellung der stabilen, wäßrigen Dispersionen nach Anspruch 1, dadurch gekennzeichnet, daß man in im wesentlichen lösemittelfreien Zustand bei Temperaturen von 50 bis 140°C

I. 95 bis 50 Gew.-% eines oder mehrerer im wesentlichen lösemittelfreier hydroxylgruppenhaltiger Aminoepoxidharze mit tertiären Aminogruppen, mit einer Aminzahl von 30 bis 120, einer Hydroxylzahl von 20 bis 300 und einem Zahlenmittel der Molmasse von 1000 bis 20000, die im Gemisch mit bis zu 15 Gew.-%, bezogen auf den Harzfestkörpergehalt der gesamten Komponente I, mit einem oder mehreren begrenzt wasserlöslichen, flüssigen, bei Einbrenntemperaturen nicht flüchtigen Verdünnungsmitteln auf der Basis von Polyoxyalkylendiolen, die mindestens eine nukleophile Gruppe zur Reaktion mit der Vernetzerkomponente II enthalten, vorliegen können, wobei die Aminoepoxidharze oder das Gemisch mit den Verdünnungsmitteln im Durchschnitt 0,3 bis 5,0 mMol/g Alkylenoxideinheiten aufweisen, mit

II. 5 bis 50 Gew.-% eines oder mehrerer Vernetzer vermischt und gegebenenfalls teilweise prekondensiert und

III. das erhaltene Gemisch bei Temperaturen von 60 bis 95°C mit 0,1 bis 1,0 mMol einer oder mehrerer Monocarbonsäuren pro g Aminoepoxidharz, neutralisiert und bei diesen Temperaturen in Gegenwart von Wasser zur Erzielung eines Festkörpergehalts von 30 bis 45 Gew.-% vermischt.

**3.** Dispersionen und Verfahren nach Anspruch 1 oder 2, worin die begrenzt wasserlöslichen, flüssigen Verdünnungsmittel der Komponente I bei Einbrenntemperaturen bis zu 250°C nicht flüchtig sind.

**4.** Dispersionen und Verfahren nach einem der vorhergehenden Ansprüche, worin die flüssigen Verdünnungsmittel der Komponente I in einer Menge von 0,01 bis 20 Gewichtsteilen in 100 Gewichtsteilen Wasser löslich sind.

**5.** Dispersionen und Verfahren nach einem der vorhergehenden Ansprüche, worin die Komponente I

A) 1 bis 15 Gew.-% eines oder mehrerer der begrenzt wasserlöslichen, flüssigen, bei Einbrenntemperaturen

nicht-flüchtigen Verdünnungsmittel und

B) 99 bis 85 Gew.-% eines oder mehrerer der hydroxylgruppenhaltigen Aminoepoxidharze mit tertiären Aminogruppen enthält.

**6.** Dispersionen und Verfahren nach einem der vorhergehenden Ansprüche, worin die Aminoepoxidharze der Komponente I frei von Alkylenoxideinheiten sind.

**7.** Dispersionen und Verfahren nach einem der Ansprüche 1 bis 4, worin die Aminoepoxidharze der Komponente I Alkylenoxideinheiten aufweisen und ausgehend von einem Gemisch aus

a) 99 bis 80 Gew.-% eines oder mehrerer aromatischer Polyglycidylether und
b) 1 bis 20 Gew.-% eines oder mehrerer mit Polyalkoxyglykolen modifizierter Diglycidylether

hergestellt wurden.

**8.** Dispersionen und Verfahren nach einem der vorhergehenden Ansprüche, worin die Alkylenoxideinheiten der Komponente I zumindest teilweise aus Propylenoxideinheiten und/oder Butylenoxideinheiten bestehen.

**9.** Dispersionen und Verfahren nach einem der vorhergehenden Ansprüche, worin die Vernetzerkomponente II teilweise oder vollständig blockierte Polyisocyanate, umesterungs- oder umamidierungsfähige Härter, Amin-Formaldehydharze, Phenol-Formaldehydharze, zur Michael-Addition fähige Vernetzer mit aktiviertem Wasserstoff und/oder Vernetzer mit endständigen, aktivierten Doppelbindungen enthält.

**10.** Wäßrige Überzugsmittel, enthaltend die Dispersionen gemäß einem der Ansprüche 1 und 3 bis 9.

**11.** Verwendung der wäßrigen Dispersionen nach einem der Ansprüche 1 und 4 bis 9 zur Herstellung wäßriger Überzugsmittel.

**12.** Verwendung der Überzugsmittel nach Anspruch 10 zur kationischen Elektrotauchlackierung auf elektrisch leitfähigen Substraten.

**Claims**

**1.** Aqueous dispersions, comprising aminoepoxy resins which are at least partially neutralised and which contain hydroxyl groups, and crosslinking agents, said dispersions having a solids content of 30 to 45 % by weight, particle sizes of the dispersed phase of up to 1000 nm and a solvent content of 0 to 5 % by weight, and obtainable by mixing or by at least partially pre-condensing, in a state which is low in solvent and at temperatures from 50 to 140°C:

I. 95 to 50 % by weight of one or more substantially solvent-free aminoepoxy resins comprising tertiary amino groups and containing hydroxyl groups, which have an amine number from 30 to 120, a hydroxyl number from 20 to 300 and a number average molecular weight from 1000 to 20,000, and which can be present in admixture with up to 15 % by weight, with respect to the resin solids content of component I as a whole, of one or more liquid diluents which exhibit a restricted solubility in water, which are non-volatile at the stoving temperature, which are based on polyoxyalkylene diols having at least two alkylene oxide units in their molecule, and which contain at least one nucleophilic group for reaction with crosslinking component II, wherein the aminoepoxy resins or the mixture with diluents contains 0.3 to 5.0 mmol/g alkylene oxide units on average, with

II. 5 to 50 % by weight of one or more crosslinking agents, and

III. neutralising the mixture obtained, at temperatures from 60 to 95°C, with 0.1 to 1.0 mmol/g of one or more monocarboxylic acids per g aminoepoxy resin, and dispersing it at these temperatures in the presence of water.

**2.** A method of producing stable, aqueous dispersions according to claim 1, characterised in that

I. 95 to 50 % by weight of one or more substantially solvent-free aminoepoxy resins comprising tertiary amino

groups and containing hydroxyl groups, which have an amine number from 30 to 120, a hydroxyl number from 20 to 300 and a number average molecular weight from 1000 to 20,000, and which can be present in admixture with up to 15 % by weight, with respect to the resin solids content of component I as a whole, of one or more liquid diluents which exhibit a restricted solubility in water, which are non-volatile at stoving temperatures, and which are based on polyoxyalkylene diols which contain at least one nucleophilic group for reaction with crosslinking component II, wherein the aminoepoxy resins or the mixture with diluents contains 0.3 to 5.0 mmol/g alkylene oxide units on average, are mixed and are optionally at least partially pre-condensed, in a state which is low in solvent and at temperatures from 50 to 140°C, with

II. 5 to 50 % by weight of one or more crosslinking agents, and

III. the mixture obtained is neutralised, at temperatures from 60 to 95°C, with 0.1 to 1.0 mmol of one or more monocarboxylic acids per g aminoepoxy resin, and is dispersed at these temperatures in the presence of water to achieve a solids content of 30 to 45 % by weight.

**3.** Dispersions and methods according to claims 1 or 2, wherein the liquid diluents of component I, which exhibit restricted solubility in water, are non-volatile at stoving temperatures up to 250°C.

**4.** Dispersions and methods according to any one of the preceding claims, wherein the liquid diluents of component I are soluble in water in an amount ranging from 0.01 to 20 parts by weight per 100 parts by weight of water.

**5.** Dispersions and methods according to any one of the preceding claims, wherein component I contains

A) 1 to 15 % by weight of one or more of the liquid diluents which exhibit a restricted solubility in water and which are non-volatile at stoving temperatures, and

B) 99 to 85 % by weight of one or more of the aminoepoxy resins which comprise tertiary amino groups and which contain hydroxyl groups.

**6.** Dispersions and methods according to any one of the preceding claims, wherein the amino epoxy resins of component I are free from alkylene oxide units.

**7.** Dispersions and methods according to any one of claims 1 to 4, wherein the aminoepoxy resins of component I comprise alkylene oxide units and have been produced from a mixture comprising

a) 99 to 80 % by weight of one or more aromatic polyglycidyl ethers and

b) 1 to 20 % by weight of one or more diglycidyl ethers modified with polyalkoxyglycols.

**8.** Dispersions and methods according to any one of the preceding claims, wherein the alkylene oxide units of component I consist, at least in part, of propylene oxide units and/or of butylene oxide units.

**9.** Dispersions and methods according to any one of the preceding claims, wherein crosslinking component II contains partially or completely blocked polyisocyanates, hardeners which are capable of transesterification or transamidification, amine-formaldehyde resins, phenol-formaldehyde resins, crosslinking agents which are capable of undergoing a Michael addition with activated hydrogen, and/or crosslinking agents containing terminal, activated double bonds.

**10.** Aqueous coating media containing the dispersions according to any one of claims 1 and claims 3 to 9.

**11.** Use of the aqueous dispersions according to any one of claims 1 and claims 4 to 9 for the production of aqueous coating media.

**12.** Use of the coating media according to claim 10 for the cationic electro-dip coating of electrically conductive substrates.

## Revendications

1. Dispersions aqueuses de résines amino-époxyde contenant des groupes hydroxyle, au moins partiellement neutralisées et d'agents de réticulation, ayant une teneur en matières solides comprise entre 30 et 45% en poids et une taille de particules de la phase dispersée variant jusqu'à 1000 nm et une teneur en solvant de 0 à 5% en poids, qu'on peut obtenir par les opérations consistant à mélanger ou au moins à précondenser partiellement à l'état pauvre en solvant, à des températures variant de 50 à 140°C

   I. de 95 à 50% en poids d'une ou de plusieurs résines amino-époxyde contenant des groupes hydroxyle, essentiellement sans solvant ayant des groupes amino tertiaires avec un indice d'amine de 30 à 120, un indice d'hydroxyle de 20 à 300 et une masse molaire moyenne en nombre de 1000 à 20000, qui peuvent se présenter en mélange avec jusqu'à 15% en poids, par rapport à la teneur en matières solides de l'ensemble du composant I, avec un ou plusieurs diluants, peu hydrosolubles, liquides, non volatils à la température de cuisson, à base de polyoxyalkylèndiols avec au moins deux motifs oxyde d'alkylène dans la molécule, qui contiennent au moins un groupe nucléophile qui réagit avec le composant de réticulation II, les résines amino-époxydes ou le mélange avec les diluants présentant en moyenne de 0,3 à 5,0 mmol/g de motifs oxyde d'alkylène, avec
   II. de 5 à 50% en poids d'un ou de plusieurs agents de réticulation, et
   III. à neutraliser le mélange obtenu à des températures de 60 à 95°C, avec 0,1 à 1,0 mmol/g d'un ou de plusieurs acides monocarboniques par g de résine amino-époxyde, et à le disperser à ces températures en présence d'eau.

2. Procédé pour la préparation des dispersions aqueuses stables selon la revendication 1, caractérisé en ce qu'on mélange et en ce qu'on précondense éventuellement partiellement à l'état essentiellement sans solvant à des températures comprises entre 50 et 140°C

   I. de 95 à 50% en poids d'une ou de plusieurs résines amino-époxyde contenant des groupes hydroxyle, essentiellement sans solvant ayant des groupes amino tertiaires avec un indice d'amine de 30 à 120, un indice d'hydroxyle de 20 à 300 et une masse molaire moyenne en nombre de 1000 à 20000, qui peuvent se présenter en mélange avec jusqu'à 15% en poids, par rapport à la teneur en matières solides de l'ensemble du composant I, avec un ou plusieurs diluants, peu hydrosolubles, liquides, non volatils aux températures de cuisson, à base de polyoxyalkylèndiols qui contiennent au moins un groupe nucléophile qui réagit avec le composant de réticulation II, les résines amino-époxydes ou le mélange avec les diluants présentant en moyenne de 0,3 à 5,0 mmol/g de motifs oxyde d'alkylène, avec
   II. de 5 à 50% en poids d'un ou de plusieurs agents de réticulation, et
   III. en ce qu'on neutralise le mélange obtenu à des températures de 60 à 95°C avec 0,1 à 1,0 mmol d'un ou de plusieurs acides monocarboniques par g de résine amino-époxyde, et en ce qu'on le mélange à ces températures en présence d'eau pour obtenir une teneur en matières solides de 30 à 45% en poids.

3. Dispersions et procédé selon la revendication 1 ou 2, dans lesquels les diluants liquides du composant I, faiblement hydrosolubles, ne sont pas volatils à des températures de cuisson jusqu'à 250°C.

4. Dispersions et procédé selon l'une des revendications précédentes, dans lesquels les diluants liquides du composant I sont solubles en une quantité de 0,01 à 20 parties en poids dans 100 parties en poids d'eau.

5. Dispersions et procédé selon l'une des revendications précédentes, dans lesquels le composant I contient

   A) de 1 à 15% en poids d'un ou de plusieurs diluants faiblement solubles, liquides, non volatils aux températures de cuisson et
   B) de 99 à 85% d'une ou de plusieurs résines amino-époxyde contenant des groupes hydroxyle avec des groupes amino tertiaires.

6. Dispersions et procédé selon l'une des revendications précédentes, dans lesquels les résines aminoépoxyde du composant I sont exemptes de motifs oxyde d'alkylène.

7. Dispersions et procédé selon l'une des revendications précédentes, dans lesquels les résines amino-époxyde du composant I présentent des motifs oxyde d'alkylène et ont été préparées à partir d'un mélange de

   a) 99 à 80% en poids d'un ou de plusieurs polyglycidyléthers aromatiques et

b) de 1 à 20% en poids d'un ou de plusieurs diglycidyléthers modifiés avec des polyalcoxyglycols.

**8.** Dispersions et procédé selon l'une des revendications précédentes, dans lesquels les motifs oxyde d'alkylène du composant I sont constitués au moins partiellement de motifs oxyde de propylène et/ou de motifs oxyde de butylène.

**9.** Dispersions et procédé selon l'une des revendications précédentes, dans lesquels le composant de réticulation II contient complètement ou partiellement des polyisocyanates bloqués, des durcisseurs de trans-estérification ou de transamidation, des résines amine formaldéhyde, des résines phénol formaldéhyde, des agents de réticulation appropriés à l'addition de Michael ayant un hydrogène activé et/ou des agents de réticulation ayant des doubles liaisons terminales activées.

**10.** Matériaux de revêtement aqueux, contenant les dispersions selon l'une des revendications 1 et 3 à 9.

**11.** Utilisation des dispersions aqueuses selon l'une des revendications 1 et 4 à 9 pour la préparation de matériaux de revêtement en milieu aqueux.

**12.** Utilisation des matériaux de revêtement selon la revendication 10 pour la peinture par électrophorèse cationique sur des substrats électriquement conducteurs.